# EUROPEAN PATENT SPECIFICATION

(11) **EP 3 752 806 B1**
(45) Date of publication and mention of the grant of the patent: **11.02.2026**
(21) Application number: 18906466.0
(22) Date of filing: 13.02.2018
(51) Int. Cl.: G01K 1/143, G01K 1/024, G01K 13/00, H01R 4/34, H01R 4/30, H02G 5/00, G01K 1/16

(54) **BUSBAR JOINT, SYSTEM FOR MEASURING TEMPERATURE OF BUSBAR JOINTS AND INTERNET OF THINGS SYSTEM**
SAMMELSCHIENENVERBINDUNG, SYSTEM ZUR MESSUNG DER TEMPERATUR VONSAMMELSCHIENENVERBINDUNGEN UND INTERNET-DER-DINGE-SYSTEM
JOINT DE BARRE OMNIBUS, SYSTÈME DE MESURE DE TEMPÉRATURE DE JOINTS DE BARRE OMNIBUS ET SYSTÈME DE L'INTERNET DES OBJETS

(43) Date of publication of application: 23.12.2020
(73) Proprietor: ABB Schweiz AG, 5400 Baden (CH)
(72) Inventor: LI, Chun, Beijing 100107 (CN); MENG, Delun, Beijing 100015 (CN); CHEN, Jiansheng, Beijing 100024 (CN); ZHANG, Yibo, Beijing 100085 (CN); HONG, Miaoting, Xiamen, Fujian 361006 (CN)
(74) Representative: Zimmermann & Partner Patentanwälte mbB
(86) International application number: PCT/CN2018/076616
(87) International publication number: WO 2019/157621

(56) References cited:
- CN-A- 105 716 716
- CN-A- 105 896 112
- CN-U- 202 494 746
- CN-U- 202 793 627
- CN-U- 205 507 814
- DE-A1- 102014 010 682
- KR-A- 20160 014 509
- US-A1- 2006 019 540
- US-A1- 2016 299 012

## Description

### FIELD

Example embodiments of the present disclosure generally relate to the field of electrical power, and more specifically, to a busbar j oint, a system for measuring temperature of a plurality of busbar joints and an Internet of Things (IoT) system.

### BACKGROUND

Copper busbars are typically used to distribute electrical power in switchgear. Segments of these busbars are connected using screws. These screw connections are a source of failure, because the screws may become loose over years. If the screws become loose, the electrical resistance of the connection increases and gets heat up. This may lead to the destruction of the switchgear and may cause damage to the surrounding building.

With a temperature measurement, the temperature of the contact points of the copper busbars can be detected and corresponding measures can be taken to avoid damage. The measurement should be done wireless since every kind of wire could be potentially short path to ground. Generally, traditional wireless temperature measuring system uses a battery to supply power, which may result in insulation risk and usually is difficult for maintenance.

Currently, a radio frequency identification (RFID) sensor has been proposed to measure temperature of the contact points of copper busbars. The RFID sensor is battery free and powered by a corresponding RFID reader. In order to install a RFID sensor, a slot or hole is set in the screw for receiving the RFID sensor. A portion having a temperature chip of the RFID is then inserted into the slot or hole. However, it is inconvenient and inefficient to set a slot or hole in the screw. Further, it is impossible for the RFID sensor to be installed securely in the screw through the slot or hole. Over years, the RFID sensor may fall off from the screw. Such instability of installation can influence the measurement accuracy. US200610019540A1 discloses an electrical connector including a connector section and a connector performance indication section. The connector section includes a first connection section adapted to connect to a first electrical conductor and a second connection section adapted to connect to a second electrical conductor. The connector section is adapted to electrical connect the first electrical conductor to the second electrical conductor. The connector performance indicating section is connected to a portion of the connector section. The connector performance indicating section includes a temperature sensitive indicator adapted to signal occurrence of a temperature of the portion of the connector section above a predetermined temperature. The temperature sensitive indicator comprises a Radio Frequency Identification (RFID) tag. US 201610299012 A1 discloses a temperature sensor for bolted connections, includes a thermally conductive housing having a skirt portion with an opening shaped to fit on a portion of a bolted connection of a bus bar. The skirt portion of the housing is configured to be in thermal contact with the bolted connection when the skirt portion is fitted on the bolted connection of the bus bar. The temperature sensor further includes a temperature transducer in thermal contact with the housing. The temperature transducer is configured to sense a temperature of the housing which relates to a temperature of the bolted connection and to output signals to a data collector I via wireless or wireline communication. The DE 10 2014 010 682 discloses a temperature measuring arrangement for a switchgear, in particular a low-voltage switchgear, with at least one switch panel switchgear panel, the components of which for a mechanical connection for mechanical connection to the arrangement in the switchgear elements for a mechanical connection to the arrangement in the switchgear. The connecting elements are equipped with temperature measuring elements, which are mounted on an electrically insulating carrier part of the respective connecting element. The electrically insulating support part can be loosely attached to the end and the temperature measuring elements determine the temperature within at least one part of the switchgear in which the respective connecting element is located continuously.

### SUMMARY

Example embodiments disclosed herein propose a busbar joint having a passive wireless sensor for measuring temperature thereof and a system for measuring temperature of a plurality of busbar joints.

In a first aspect, there is provided a busbar joint. The busbar joint comprises at least two busbars. The busbar joint further comprises a fastener which is configured to couple and fasten the at least two busbars. The busbars are overlapped with each other and are coupled by the fastener. The busbar joint further comprises a passive wireless sensor which is arranged on a first busbar of the at least two busbars and comprises a chip arranged on a surface thereof. The chip is in contact with a target object for measuring temperature of the busbar joint, and the target object is selected from a second busbar of the at least two busbars or the fastener.

Due to overlapping of the first busbar and the fastener or the second busbar, it is possible to arrange the passive wireless sensor on the first busbar and attach the chip to the second busbar or the fastener. In this way, the passive wireless sensor can be securely installed on the first busbar, while enabling the chip to be attached to the second busbar or the fastener to measure temperature thereof. Compared with conventional installation of the RFID sensor into the screw, setting a slot or hole in the screw can be avoided. Further, compared with being inserted into the slot or hole in the screw, the passive wireless sensor can be installed more securely and permanently. Such stability of installation of the passive wireless sensor thus can ensure a good attachment of the chip to the second busbar or the fastener, thus ensuring the measurement accuracy.

According to the claimed invention, the chip is in contact with the target object. A gap between the surface of the passive wireless sensor and the target object is filled with at least one of the following: thermal conductive gel, thermal conductive film and thermal conductive adhesive.

By using thermal conductive filled material, the chip is enabled to sufficiently sense the surrounding temperature. Thus, the accuracy and speed for measuring temperature can be further improved. Moreover, the filled material can facilitate to securely install the passive wireless sensor in the busbar joint.

In some embodiments, the chip is in contact with a copper plate which is in contact with the fastener. A gap between the copper plate and the surface of the passive wireless sensor is filled with the at least one of the following: thermal conductive gel, thermal conductive film and thermal conductive adhesive.

The copper plate in contact with the fastener can well conduct the heat of the fastener to the chip, so that the chip can accurately measure temperature of the fastener. Furthermore, the thermal conductive gel, film or adhesive can further improve the accuracy of the measurement, as described above.

In some embodiments, the fastener comprises a bolt and a washer. The chip is attached to the bolt or the washer.

In some embodiments, the fastener comprises a bolt and a washer. The copper plate is in contact with the bolt or the washer.

In some embodiments, the passive wireless sensor comprises a radio frequency identification (RFID) sensor.

In a second aspect, there is provided a system for monitoring temperature of a plurality of busbar joints according to the first aspect. The plurality of busbar joints are arranged in switchgear. The system comprises a reader configured to read temperature of at least one of the plurality of busbar joints. The temperature of the at least one busbar joint is measured by the chip of the passive wireless sensor of the at least one busbar joint. The system further comprises a far field antenna arranged at a top of the switchgear and configured to enable communications between the passive wireless sensors of the plurality of bus bar joints and the reader.

The far filed antenna is arranged at the top of the switchgear. In this way, all passive wireless sensors are within the coverage area of the far filed antenna, and thus the stable, high quality communications can be achieved between the passive wireless sensors and the reader.

In some embodiments, the far field antenna and the passive wireless sensor of the at least one busbar joint are separated by a metal shielding. The system further comprises at least one near field antenna arranged in approximate to the passive wireless sensor and configured to improve the communication quality between the passive wireless sensor and the reader.

In the case that a metal shielding exists between the passive wireless sensor of one busbar joint and the far field antenna, a near field antenna is arranged in approximate to the passive wireless sensor. In this way, the passive wireless sensor can obtain the required power from the reader and send the measured temperature to the reader via the near field antenna. Thus the passive wireless sensor can communicate with the reader with a stable and high quality.

In a third aspect, there is provided an Internet of Things (IoT) system. The IoT system comprises a plurality of busbar joints according to the first aspect. The IoT system further comprises a system for monitoring temperature of the plurality of busbar joints according to the second aspect.

According to the embodiments of the present disclosure, the passive wireless sensor can be installed securely and the temperature of the busbar joint can be measured accurately, thereby improving the reliability and safety of the switchgear. In addition, the communication quality between the passive wireless sensors of the plurality of busbar joints and the reader can be ensured.

It is to be understood that the Summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Through the following detailed descriptions with reference to the accompanying drawings, the above and other objectives, features and advantages of the example embodiments disclosed herein will become more comprehensible. In the drawings, several example embodiments disclosed herein will be illustrated in an example and in a nonlimiting manner, wherein:
Fig. 1A is a schematic diagram illustrating a busbar joint in accordance with an embodiment of the present disclosure;
Fig. 1B is a schematic diagram illustrating a busbar joint in accordance with an embodiment of the present disclosure;
Figs. 2A-2C are schematic diagrams illustrating, for explanatory purpose, a busbar joint in accordance with a (non-claimed) embodiment of the present disclosure;
Fig. 3A is a schematic diagram illustrating a busbar joint in accordance with an embodiment of the present disclosure;
Fig. 3B is a schematic diagram illustrating a busbar joint in accordance with an embodiment of the present disclosure;
Fig. 3C is a schematic diagram illustrating a busbar joint in accordance with an embodiment of the present disclosure;
Fig. 4 is a schematic diagram illustrating a system for measuring temperature of a plurality of busbar joints in accordance with an embodiment of the present disclosure; and
Fig. 5 is a schematic diagram illustrating a system for measuring temperature of a plurality of busbar joints in accordance with an embodiment of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitations as to the scope of the disclosure. The disclosure described herein can be implemented in various manners other than the ones describe below.

As used herein, the term "comprises" or "includes" and its variants are to be read as open terms that mean "includes, but is not limited to." The term "based on" is to be read as "based at least in part on." The term "one embodiment" and "an embodiment" are to be read as "at least one embodiment." The term "another embodiment" is to be read as "at least one other embodiment."

Unless specified or limited otherwise, the terms "mounted," "connected," "supported," and "coupled" and variations thereof are used broadly and encompass direct and indirect mountings, connections, supports, and couplings. Furthermore, "connected" and "coupled" are not restricted to physical or mechanical connections or couplings. Other definitions, explicit and implicit, may be included below.

Traditionally, a passive radio frequency identification (RFID) sensor is installed into a screw which connects segments of copper busbars to measure temperature of the copper busbars. In order to install the RFID sensor into the screw, a slot or a hole needs to be set in the screw, which is very inconvenient. In addition, such installation of the RFID sensor into the screw will cause instability of installation of the RFID sensor and thus inaccuracy of measurement. Further, over years, the RFID sensor may fall off from the screw and cannot measure the temperature of the copper busbars.

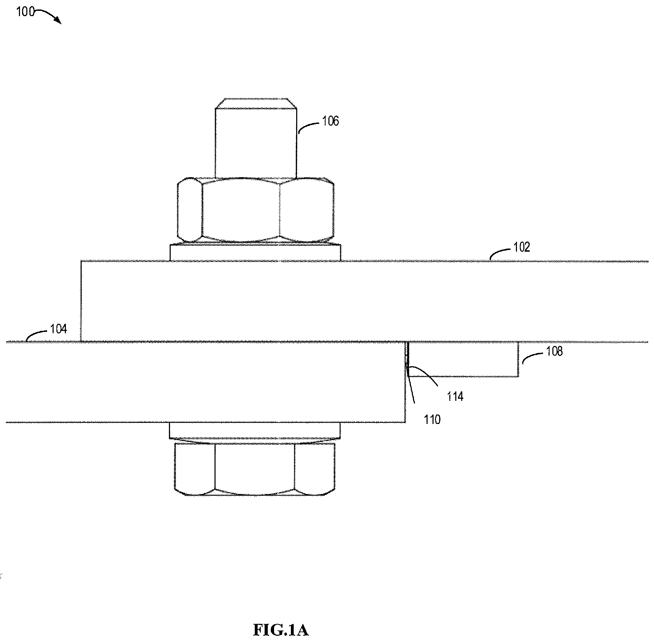

According to embodiments of the present disclosure, a new busbar joint is provided. The busbar joint as proposed herein comprises at least two busbars coupled by a fastener and overlapped with each other. With such an overlapping layout, a passive wireless sensor is arranged on the first busbar while the temperature chip of the passive wireless sensor is attached to the second busbar or the fastener. Compared with conventional solutions known in the art, the passive wireless sensor can be installed in a more secure and permanent fashion. Moreover the temperature of the busbar joint can be sensed or detected more accurately. Now some example embodiments of the present disclosure will be described with reference to Figs. 1A-3C.

Fig. 1A is a schematic diagram illustrating a busbar joint 100 in accordance with an embodiment of the present disclosure. The busbar joint 100 comprises a first busbar 102 and a second busbar 104 for distributing electrical power. In some embodiments, the first busbar 102 and the second busbar 104 are made of copper. Although only two busbars 102 and 104 are shown in Fig. 1A, those skilled in the art would be appreciated that three or more busbars are also applicable.

The busbar joint 100 further comprises a fastener 106. The fastener 106 can be used to couple and fasten the first busbar 102 and the second busbar 104. When the fastener 106 becomes loose, the electrical resistance of the busbar joint 100 will increase and thus the busbar joint 100 itself will heat up. The high temperature of the busbar joint 100 may cause damage to the surrounding building. Therefore, it is necessary to sense the temperature of the busbar joint 100 to discover the loose state of the fastener 106 so as to avoid such damages.

According to embodiments of the present disclosure, a passive wireless sensor 108 is included in the busbar joint 100 to measure the temperature of the busbar joint 100. The passive wireless sensor 108 is battery free and obtains power from a corresponding reader. The passive wireless sensor 108 comprises a chip 110 for measuring temperature. The chip 110 is arranged on a surface 114 of the passive wireless sensor 108, for example, via adhesive. In some embodiments, the passive wireless sensor 108 may comprise a passive RFID sensor.

In order to accurately measure temperature of the busbar joint 100 over time, according to embodiments of the present disclosure, the passive wireless sensor 108 is securely installed into the busbar joint 100 and the chip 110 is closely attached to the busbar joint 100. As shown in Fig. 1A, in some embodiments, the passive wireless sensor 108 is arranged on the first busbar 102. In some embodiments, the passive wireless sensor 108 can be bonded to the first busbar 102 via adhesive. As such, the chip 110 is in contact with the second busbar 104 for measuring temperature of the second busbar 104 as temperature of the busbar joint 100. Since the first busbar 102 and the second busbar 104 overlaps with each other, it is possible to arrange the passive sensor 108 on the first busbar 102 while enabling the chip 110 to be in contact with the second busbar 104.

As shown in Fig. 1A, with the overlapping layout of the first busbar 102 and the second busbar 104, the passive wireless sensor 108 is installed in the busbar joint 100 to measure temperature of the busbar joint 100. In this way, the passive wireless sensor 108 can be installed on the first busbar 102 more conveniently and securely, as compared with the conventional installation of the RAID sensor into the screw. Additionally, the chip 110 keeps in contact with the second busbar 104, thus the temperature of the second busbar 104 can be measured accurately.

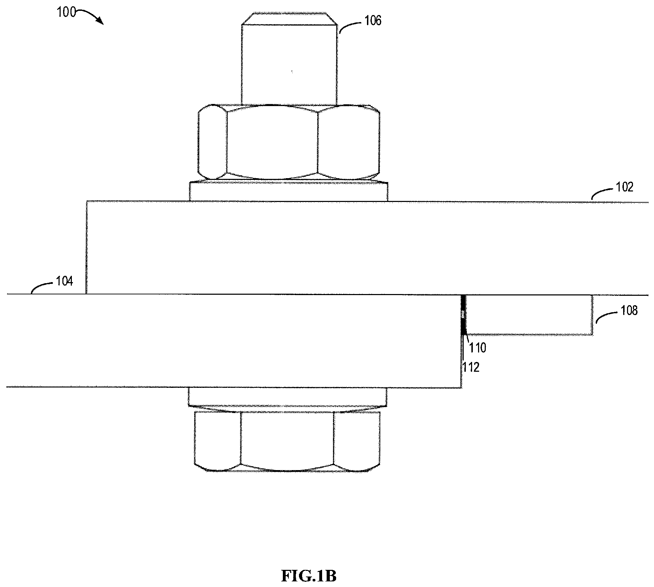

In some embodiments, in order to further improve the measurement accuracy and installation stability of the passive wireless sensor 108, an improvement can be made to the busbar joint 100 as shown in Fig. 1A. Such improvement is now described with reference to Fig. 1B.

Fig. 1B is a schematic diagram illustrating a busbar joint 100 in accordance with an embodiment of the present disclosure. Similar to Fig. 1A, the busbar joint 100 in this example comprises a first busbar 102, a second busbar 104, a fastener 106 and a passive wireless sensor 108. The fastener 106 is used to couple and fasten the busbars 102, 104. The passive wireless sensor 108 is arranged on the first busbar 102. The chip 110 is in contact with the second busbar 104 for measuring temperature of the second busbar 104.

In the embodiment shown in Fig. 1B, there is a gap 112 between the surface 114 of the passive wireless sensor and the second busbar 104, where the chip 110 is arranged on the surface 114. In this embodiment, the gap 112 is filled with at least one of the following: thermal conductive gel, thermal conductive film and thermal conductive adhesive. These thermal conductive materials can cause the contact area between the chip 110 and the thermal source (i.e., the second busbar 104) to be larger, so that the heat can be sufficiently and quickly conducted to the chip 110. Therefore, the accuracy and speed of the measurement can be further improved as compared with Fig. 1A. In addition, these materials can further improve the stability of installation of the passive wireless sensor 108 in the busbar joint 100.

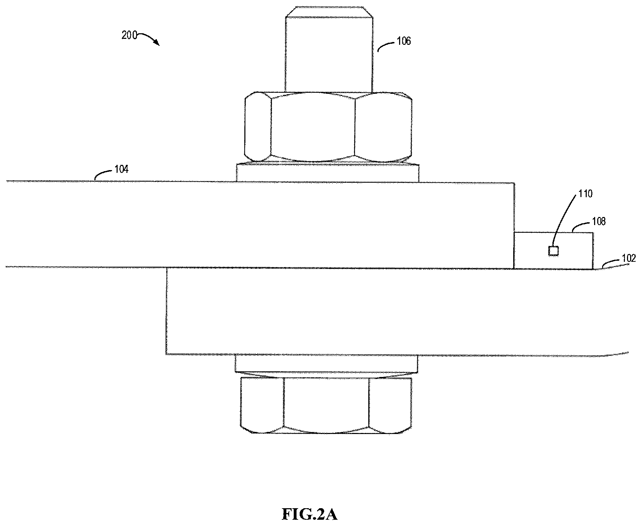

Figs. 1A and 1B illustrate the situations where the chip 110 is in contact with the second busbar 104. In some alternative embodiments, the chip 110 may be attached to the second busbar 104 via a heat-conducting medium. Such an arrangement would be useful to those situations where it is hard or even impossible for the chip 110 to be in contact with the second busbar 104 due to space limitation of the first busbar 102. These embodiments are now described with reference to Figs. 2A-2C which illustrate a busbar joint 200 in accordance with an embodiment of the present disclosure.

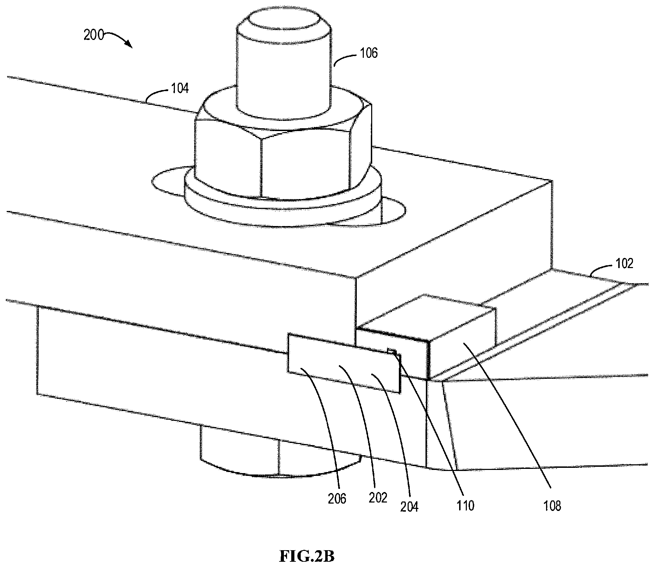

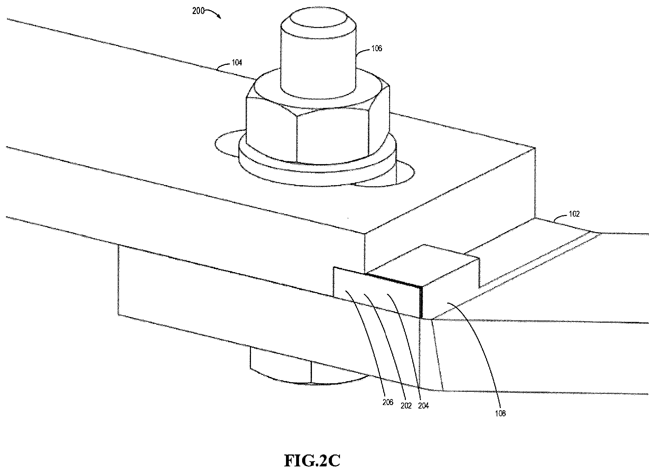

As shown in a non claimed embodiment in Figs. 2A, 2B and 2C, the busbar joint 200 comprises a first busbar 102, a second busbar 104, a fastener 106 configured to couple and fasten the first busbar 102 and the second busbar 104, and a passive wireless sensor 108. The passive wireless sensor 108 has a chip 110 arranged on a surface thereof. These components are similar to those shown in Fig. 1A and will not be described in details.

In this non claimed embodiment, the passive wireless sensor 108 is also arranged on the first busbar 102. The chip 110 is attached to the second busbar 104 via a heat-conducting medium, rather than in contact with the second busbar 104. As shown in Fig. 2C, the chip 110 is in contact with a first part 204 of a copper plate 202. A second part 206 of the copper plate 202 is attached to the second busbar 104. The chip 110 thus measures temperature of the second busbar 104 conducted by the copper plate 202, as temperature of the busbar joint 200.

Since copper has a good heat conducting property, the copper plate 202 can sufficiently conduct the heat of the second busbar 104 to the chip 110. Therefore, the accuracy of measurement can be ensured even if the chip 110 cannot be in contact with the second busbar 104. Although the copper plate 202 is used in this embodiment, those skilled in the art would be appreciated that other plate made of some material having good heat conducting property can also be used.

As shown in Figs. 2A, 2B and 2C, the first busbar 102 and the second busbar 104 overlap with each other. Such overlapping layout ensures that the passive wireless sensor 108 can be installed on the first busbar 102, while the chip 110 is attached to the second busbar 104. In this way, the stability and permanency of installation of the passive wireless sensor 108 can be ensured, while the measurement accuracy is guaranteed.

In some embodiments, the second part 206 of the copper plate 202 can be attached to the second busbar 104 by welding, mechanical connection or bonding. Therefore, the copper plate 202 can be securely attached to the second busbar 104. This in turn facilitates the contact of the chip 110 with the copper plate 202, thus the chip 110 can accurately measure the temperature of the second busbar 104.

In some embodiments, as shown in Fig. 2B, after the chip 110 is in contact with the first part 204 of the copper plate 202, a gap is formed between the first part 204 and the surface of the passive wireless sensor 108, where the chip 110 is arranged on the surface. In order to enable the passive wireless sensor 108 to be installed more securely and increase the speed of heat conducting, this gap may be filled with some thermal conductive binding material, such as thermal conductive gel, thermal conductive film and thermal conductive adhesive and the like..

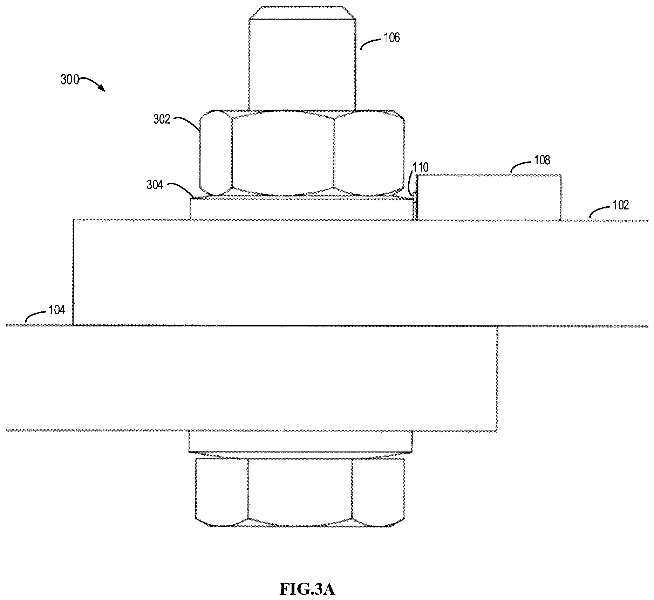

Figs. 1A to 2C illustrate that the chip 110 is in contact with the second busbar 104 or is attached to the second busbar 104 via the copper plate 202 to measure temperature of the second busbar 104. Alternative to such an arrangement, in other embodiments, the chip 110 may be arranged to be in contact with the fastener 106 for measuring temperature of the fastener 106 as temperature of the busbar joint. Such embodiments would be useful to those situations where it is difficult or even impossible to enable the chip 110 to be in contact with or attached to the second busbar 104 due to space limitation. These embodiments are now described with reference to Figs. 3A-3C.

Fig. 3A is a schematic diagram illustrating a busbar joint 300 in accordance with an embodiment of the present disclosure. Similar to Figs. 1A-2C, in the example of Fig. 3A, a first busbar 102 and a second busbar 104 are coupled and fastened by a fastener 106. As described above, if the fastener 106 becomes loose, the temperature of the busbar joint 300 will increase, which will lead to damage to the surroundings. So it is necessary to monitor the temperature of the busbar joint 300.

According to the embodiments of the present disclosure, a passive wireless sensor 108 is arranged on the first busbar 102. The passive wireless sensor 108 comprises a chip 110 arranged on a surface thereof. Different from Figs. 1A-2C, the chip 110 is in contact with the fastener 106 for measuring temperature of the fastener 106 as temperature of the busbar joint 300.

As shown in Fig. 3A, the first busbar 102 and the fastener 106 overlap with each other. With this overlapping layout, the passive wireless sensor 108 is installed on the first busbar 102, while keeping the chip 110 in contact with the fastener 106. Such arrangement can enable the passive wireless sensor 108 to be securely installed in the busbar joint 300, while the chip can accurately measure the temperature of the fastener 106. Compared with the conventional arrangement of the RAID sensor, it is easier to implement such arrangement.

In some embodiments, the fastener 106 may comprise a bolt 302 and a washer 304. The chip 110 may be in contact with the bolt 302 or the washer 304. Although Fig. 3A merely shows that the chip 110 is in contact with the washer 304, those skilled in the art would be appreciated that the chip 110 can also be in contact with the bolt 302, depending on the design of the passive wireless sensor 108 and the arrangement of the chip 110 on the sensor 108.

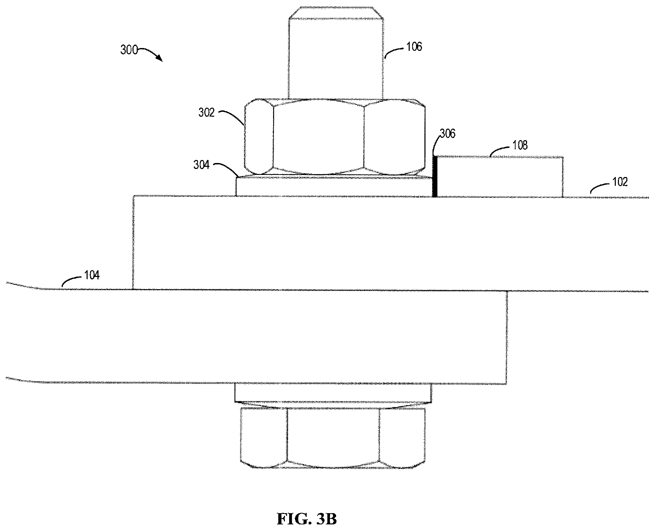

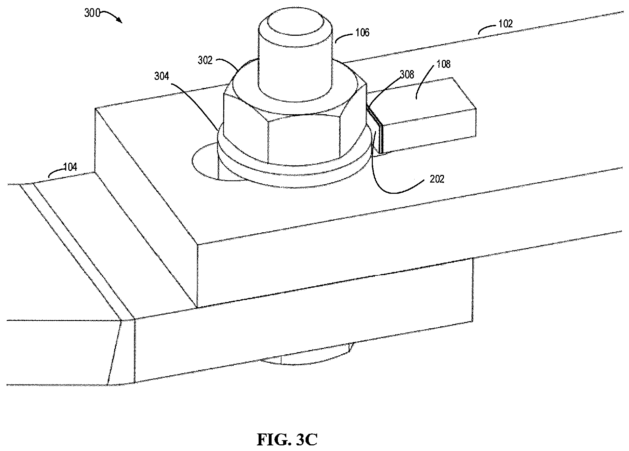

In order to further improve the measurement accuracy and installation stability, an improvement can be made to the busbar joint 300 shown in Fig. 3A. Such improvement is now described with reference to Figs. 3B and 3C.

Fig. 3B is a schematic diagram illustrating a busbar joint 300 in accordance with an embodiment of the present disclosure. Similar to Fig. 3A, the busbar joint 300 shown in Fig. 3B comprises a firt busbar 102, a second busbar 104, a fastener 106 and a passive wireless sensor 108. The details for these components have been described above and will not be repeated.

In the embodiment as shown in Fig. 3B, a gap 306 is formed between the fastener 106 and the surface of the passive wireless sensor 108 where the chip 110 is arranged. This gap 306 can be used to further improve the stability of installation of the passive wireless sensor 108 and the accuracy of measurement of the chip 110. In some embodiments, thermal conductive gel, thermal conductive film or thermal conductive adhesive can be used to fill the gap 306. Therefore, the heat of the fastener 106 can be sufficiently and quickly conducted to the chip 110 via these thermal conductive materials. Additionally, these materials are also useful for securely installing the passive wireless sensor 108 in the busbar joint 300.

Fig. 3C is a schematic diagram illustrating a busbar joint 300 in accordance with an embodiment of the present disclosure. Similar to Fig. 3A, the busbar joint 300 shown in Fig. 3C comprises a firt busbar 102, a second busbar 104, a fastener 106 and a passive wireless sensor 108. The details for these components have been described above and will not be repeated..

In the embodiment shown in Fig. 3C, the chip 110 is in contact with a copper plate 202. The copper plate 202 is in contact with the fastener 106. Thus the chip 110 measures the temperature of the fastener 106 conducted by the copper plate 202. When the chip 110 is in contact with the copper plate 202, a gap 308 is formed between the copper plate 202 and the surface of the passive wireless sensor 108, where the chip 110 is arranged on the surface. As described above, this gap 308 may be filled with thermal conductive gel, thermal conductive film or thermal conductive adhesive and the like. As a result, the stability of installation of the passive wireless sensor 108 and the accuracy of measurement of the chip 110 are both improved.

By means of the copper plate 202 and at least one of thermal conductive gel, thermal conductive film and thermal conductive adhesive, the heat of the fastener 106 can be conducted to the chip 110 more sufficiently and quickly. Therefore, the accuracy and speed of the measurement can be improved as compared with Fig. 3A.

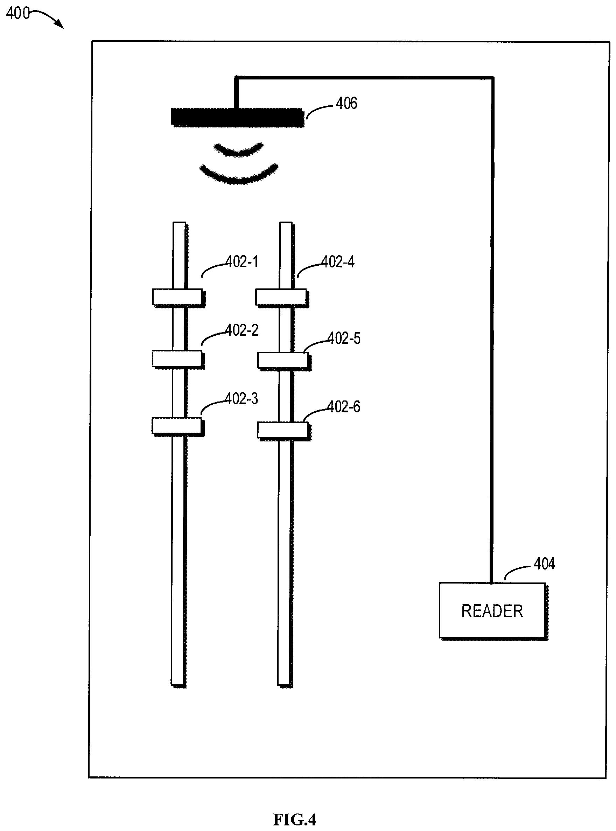

A busbar joint having a passive wireless sensor arranged thereon for measuring its temperature has been described with reference to Figs. 1A to 3C. The measured temperature needs to be communicated to a reader, so that relevant people can learn the temperature of the busbar joints to discover that the fastener become loose and take a countermeasure. Fig. 4 is a schematic diagram illustrating a system 400 for measuring temperature of a plurality of busbar joints 402-1, 402-2, 402-3, 402-4, 402-5 and 402-6 in accordance with an embodiment of the present disclosure.

The plurality of busbar joints 402-1, 402-2, 402-3, 402-4, 402-5 and 402-6 are arranged in switchgear. The plurality of busbar joints 402-1, 402-2, 402-3, 402-4, 402-5 and 402-6 may comprise busbar joints 100, 200 and 300 as described in Figs. 1A to 3C.

The system 400 comprises a reader 404. The reader 404 may be arranged inside the switchgear or outside the switchgear. In some embodiments, the reader 404 may comprise a RFID reader. The reader 404 is configured to continuously generate a wave for powering the passive wireless sensors of the plurality of busbar joints 402-1, 402-2, 402-3, 402-4, 402-5 and 402-6. The reader 404 is further configured to read temperature of at least one of the plurality of busbar joints 402-1, 402-2, 402-3, 402-4, 402-5 and 402-6. As described with reference to Figs. 1A to 3C, the temperature of the at least one busbar joint is measured by the chip of the passive wireless sensor of the busbar joint.

The system 400 further comprises a far field antenna 406. The far field antenna 406 is connected with the reader 404 via a wire or cable. The passive sensors of the plurality of busbar joints 402-1, 402-2, 402-3, 402-4, 402-5 and 402-6 receive power and commands from the reader 406 and sends the measured temperature to the reader 406 via the far field antenna 406. According to the geometry of the switchgear and the layout of the plurality of busbar joints 402-1, 402-2, 402-3, 402-4, 402-5 and 402-6, the far field antenna 406 can be placed in a suitable position in the switchgear.

In a situation where there is less metal shielding between the passive wireless sensors and the reader 406, that is there are few busbar joints arranged in the switchgear, the far field antenna 406 may be arranged at a top of the switchgear. In this case, the switchgear has a space large enough to make it possible that all passive wireless sensors receive stable high quality signal from the reader 406 through reader antenna gain. Thus the far filed antenna 406 arranged at the top of the switchgear can provide a signal to power the passive wireless sensors and obtain the measured temperature from the sensors.

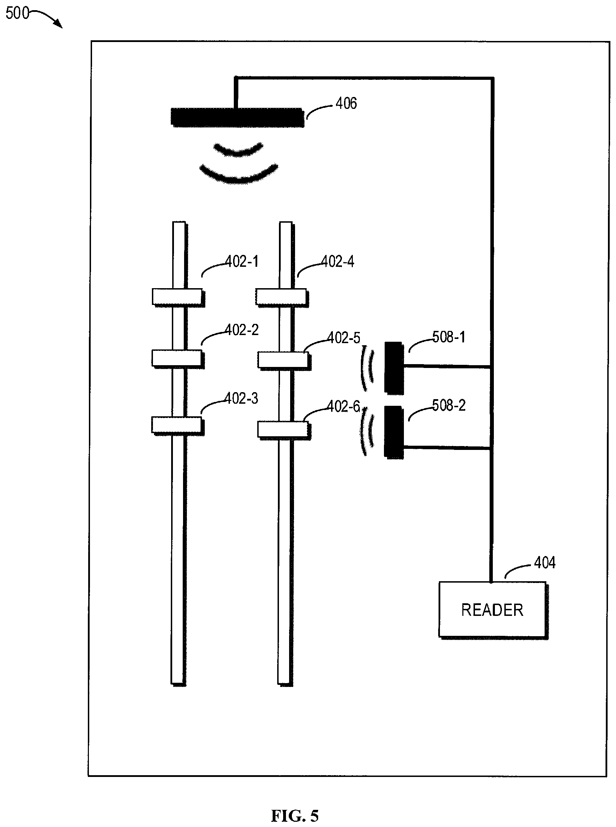

In a situation where there are many busbar joints arranged in the switchgear, in order to ensure high communication quality between the passive wireless sensors and the reader, there is a need to improve the system 400 shown in Fig. 4. Such improvement is now described with reference to Fig. 5 which illustrates a system 500 for measuring temperature of a plurality of busbar joints 402-1, 402-2, 402-3, 402-4, 402-5 and 402-6 in accordance with an embodiment of the present disclosure.

Similar to system 400 as shown in Fig.4, the system 500 comprises a reader 404 arranged inside or outside the switchgear and a far field antenna 406 arranged at the top of the switchgear. The reader 404 is configured to read temperature of the plurality of busbar joints 402-1, 402-2, 402-3, 402-4, 402-5 and 402-6 via the far field antenna 406..

In some cases, for example when there exist many busbar joints in the switchgear, a complex metal shielding condition will lead poor communication quality for certain busbar joints. As an example, the far field antenna 406 and the passive wireless sensor of the busbar joint 402-5 are separated by a metal shielding, and the far field antenna 406 and the passive wireless sensor of the busbar joint 402-6 are also separated by a metal shielding. Thus the passive wireless sensors of the busbar joint 402-5 and 402-6 cannot receive a stable high quality signal from the reader 406 through the gain of the far field antenna 406.

In some embodiments, in order to ensure that the passive wireless sensors of the busbar joints 402-5 and 402-6 can communicate with the reader 404 with a high quality, near field antennas 508-1 and 508-2 may be arranged in approximate to the passive wireless sensors of the busbar joint 402-5 and 402-6, respectively.

In system 500, the far field antenna 406 arranged at the top of the switchgear ensures the communication quality between the passive wireless sensors of the busbar joints 402-1, 402-2, 402-3 and 402-4 and the reader 404. The near field antennas 508-1 and 508-2 ensures the communication quality between the passive wireless sensors of the busbar joinst 402-5 and 402-6 and the reader 404, respectively. Therefore, stable high quality communication can be achieved when measuring temperature of the plurality of busbar joints 402-1, 402-2, 402-3, 402-4, 402-5 and 402-6.

Although Fig. 5 shows two near field antennas 508-1 and 508-2, those skilled in the art would be appreciated that any number of near field antennas can be used, depending on the metal shielding condition in the switchgear.

In some embodiments, the system 400 or system 500 may be deployed as an Internet-of-Things (IoT) system.

The descriptions of the various embodiments of the present disclosure have been presented for purposes of illustration, but are not intended to be exhaustive or limited to the embodiments disclosed. The terminology used herein was chosen to best explain the principles of the embodiments, the practical application or technical improvement over technologies found in the marketplace, or to enable others of ordinary skill in the art to understand the embodiments disclosed herein.

## Claims

1. A busbar joint (100, 200, 300) comprising:
at least two busbars (102, 104);
a fastener (106) configured to couple and fasten the at least two busbars (102, 104), wherein
the busbars (102, 104) are overlapped with each other and are coupled by the fastener (106); and
a passive wireless sensor (108) arranged on a first busbar (102) of the at least two busbars (102, 104) the busbar joint (100, 200, 300) being **characterised in that**
the passive wireless sensor (108) comprises a chip (110) arranged on a surface (114) thereof,
wherein the chip (110) is in contact with a target object for measuring temperature of the busbar joint (100, 200, 300), the target object is selected from a second busbar (104) of the at least two bus bars (102, 104) or the fastener (106).

2. The busbar joint (100, 300) of claim 1, wherein the chip (110) is in contact with the target object,
and wherein a gap (112, 306) between the surface (114) of the passive wireless sensor (108) and the target object is filled with at least one of the following: thermal conductive gel, thermal conductive film and thermal conductive adhesive.

3. The busbar joint (300) of claim 1, wherein the chip (110) is in contact with a copper plate (202) which is in contact with the fastener (106), and a gap (308) between the copper plate (202) and the surface (114) of the passive wireless sensor (108) is filled with the at least one of the following: thermal conductive gel, thermal conductive film and thermal conductive adhesive.

4. The busbar joint (300) of claim 1, wherein the fastener (106) comprises a bolt (302) and a washer (304), and the chip (110) is attached to the bolt (302) or the washer (304).

5. The busbar joint (300) of claim 3, wherein the fastener (106) comprises a bolt (302) and a washer (304), and the copper plate (202) is in contact with the bolt (302) or the washer (304).

6. The busbar joint of claim 1, wherein the passive wireless sensor (108) comprises a radio frequency identification (RFID) sensor.

7. A system (400, 500) for monitoring temperature comprising:
a plurality of busbar joints (402-1~402-6), according to any one of claim 1-6, said plurality of busbar joints being configured to be arranged in a switchgear;
a reader (404) configured to read temperature of at least one of the plurality of busbar joints (402-1~402-6) measured by the chip of the passive wireless sensor of the at least one busbar joint; and
a far field antenna (406) configured to be arranged at a top of the switchgear and configured to enable communications between the passive wireless sensors of the plurality of bus bar joints (402-1~402-6) and the reader (404).

8. The system (500) of claim 7, wherein the far field antenna (406) and the passive wireless sensor of the at least one bus bar joint (402-5, 4026) are separated by a metal shielding, and the system (500) further comprises:
at least one near field antenna (508-1, 508-2) arranged in approximate to the passive wireless sensor and configured to improve the communication quality between the passive wireless sensor and the reader (404).

9. An Internet of Things (IoT) system comprising:
a system for monitoring temperature of the plurality of busbar joints according to any one of claims 7 and 8.

## Patentansprüche

1. Sammelschienenverbindung (100, 200, 300), die Folgendes umfasst:
mindestens zwei Sammelschienen (102, 104);
ein Befestigungselement (106), das zum Koppeln und Befestigen der mindestens zwei Sammelschienen (102, 104) ausgelegt ist, wobei
die Sammelschienen (102, 104) einander überlagert und durch das Befestigungselement (106) gekoppelt sind; und
einen passiven drahtlosen Sensor (108), der auf einer ersten Sammelschiene (102) der mindestens zwei Sammelschienen (102, 104) angeordnet ist, wobei die Sammelschienenverbindung (100, 200, 300) **dadurch gekennzeichnet ist, dass** der passive drahtlose Sensor (108) einen Chip (110) umfasst, der auf einer Oberfläche (114) davon angeordnet ist,
wobei der Chip (110) zum Messen einer Temperatur der Sammelschienenverbindung (100, 200, 300) mit einem Zielobjekt in Kontakt steht, wobei das Zielobjekt aus einer zweiten Sammelschiene (104) der mindestens zwei Sammelschienen (102, 104) oder dem Befestigungselement (106) ausgewählt ist.

2. Sammelschienenverbindung (100, 300) nach Anspruch 1, wobei der Chip (110) mit dem Zielobjekt in Kontakt steht,
und wobei ein Spalt (112, 306) zwischen der Oberfläche (114) des passiven drahtlosen Sensors (108) und dem Zielobjekt mit mindestens einem der Folgenden gefüllt ist: einem wärmeleitfähigen Gel, einem wärmeleitfähigen Film und einem wärmeleitfähigen Klebstoff.

3. Sammelschienenverbindung (300) nach Anspruch 1, wobei der Chip (110) mit einer Kupferplatte (202) in Kontakt steht, die mit dem Befestigungselement (106) in Kontakt steht, und ein Spalt (308) zwischen der Kupferplatte (202) und der Oberfläche (114) des passiven drahtlosen Sensors (108) mit dem mindestens einen der Folgenden gefüllt ist: einem wärmeleitfähigen Gel, einem wärmeleitfähigen Film und einem wärmeleitfähigen Klebstoff.

4. Sammelschienenverbindung (300) nach Anspruch 1, wobei das Befestigungselement (106) einen Bolzen (302) und eine Unterlegscheibe (304) umfasst und der Chip (110) an dem Bolzen (302) oder der Unterlegscheibe (304) angebracht ist.

5. Sammelschienenverbindung (300) nach Anspruch 3, wobei das Befestigungselement (106) einen Bolzen (302) und eine Unterlegscheibe (304) umfasst und die Kupferplatte (202) mit dem Bolzen (302) oder der Unterlegscheibe (304) in Kontakt steht.

6. Sammelschienenverbindung nach Anspruch 1, wobei der passive drahtlose Sensor (108) einen Hochfrequenzidentifikations(RFID)-Sensor umfasst.

7. System (400, 500) zum Überwachen einer Temperatur, das Folgendes umfasst:
eine Vielzahl von Sammelschienenverbindungen (402-1-402-6) nach einem der Ansprüche 1-6, wobei die Vielzahl von Sammelschienenverbindungen dazu ausgelegt sind, in einer Schaltanlage angeordnet zu sein;
ein Lesegerät (404), das dazu ausgelegt ist, eine durch den Chip des passiven drahtlosen Sensors der mindestens einen Sammelschienenverbindung gemessene Temperatur mindestens einer der Vielzahl von Sammelschienenverbindungen (402-1-402-6) auszulesen; und
eine Fernfeldantenne (406), die dazu ausgelegt ist, an einer Oberseite der Schaltanlage angeordnet zu sein, und dazu ausgelegt ist, Kommunikationen zwischen den passiven drahtlosen Sensoren der Vielzahl von Sammelschienenverbindungen (402-1-402-6) und dem Lesegerät (404) zu ermöglichen.

8. System (500) nach Anspruch 7, wobei die Fernfeldantenne (406) und der passive drahtlose Sensor der mindestens einen Sammelschienenverbindung (402-5, 4026) durch eine Metallabschirmung getrennt sind und das System (500) ferner Folgendes umfasst:
mindestens eine Nahfeldantenne (508-1, 508-2), die in der Nähe des passiven drahtlosen Sensors angeordnet und dazu ausgelegt ist, die Kommunikationsqualität zwischen dem passiven drahtlosen Sensor und dem Lesegerät (404) zu verbessern.

9. Internet-der-Dinge(IoT)-System, das Folgendes umfasst:
ein System zum Überwachen einer Temperatur der Vielzahl von Sammelschienenverbindungen nach einem der Ansprüche 7 und 8.

## Revendications

1. Joint de barre omnibus (100, 200, 300), comprenant :
au moins deux barres omnibus (102, 104) ;
un élément de fixation (106) configuré pour accoupler et fixer les au moins deux barres omnibus (102, 104), dans lequel
les barres omnibus (102, 104) se chevauchent et sont couplées par l'élément de fixation (106) ; et
un capteur sans fil passif (108) agencé sur une première barre omnibus (102) des au moins deux barres omnibus (102, 104), le joint de barre omnibus (100, 200, 300) étant **caractérisé en ce que** le capteur sans fil passif (108) comprend une puce (110) agencée sur une surface (114) de celui-ci,
dans lequel la puce (110) est en contact avec un objet cible pour mesurer la température du joint de barre omnibus (100, 200, 300), l'objet cible est choisi parmi une seconde barre omnibus (104) des au moins deux barres omnibus (102, 104) ou l'élément de fixation (106).

2. Joint de barre omnibus (100, 300) selon la revendication 1, dans lequel la puce (110) est en contact avec l'objet cible,
et dans lequel un espace (112, 306) entre la surface (114) du capteur sans fil passif (108) et l'objet cible est rempli avec au moins l'un de ce qui suit : gel thermoconducteur, film thermoconducteur et adhésif thermoconducteur.

3. Joint de barre omnibus (300) selon la revendication 1, dans lequel la puce (110) est en contact avec une plaque de cuivre (202) qui est en contact avec l'élément de fixation (106), et un espace (308) entre la plaque de cuivre (202) et la surface (114) du capteur sans fil passif (108) est rempli avec l'au moins un de ce qui suit : gel thermoconducteur, film thermoconducteur et adhésif thermoconducteur.

4. Joint de barre omnibus (300) selon la revendication 1, dans lequel l'élément de fixation (106) comprend un boulon (302) et une rondelle (304), et la puce (110) est fixée au boulon (302) ou à la rondelle (304).

5. Joint de barre omnibus (300) selon la revendication 3, dans lequel l'élément de fixation (106) comprend un boulon (302) et une rondelle (304), et la plaque de cuivre (202) est en contact avec le boulon (302) ou la rondelle (304).

6. Joint de barre omnibus selon la revendication 1, dans lequel le capteur sans fil passif (108) comprend un capteur d'identification par radiofréquence (RFID).

7. Système (400, 500) de surveillance de température, comprenant :
une pluralité de joints de barres omnibus (402-1-402-6), selon l'une quelconque des revendications 1 à 6, ladite pluralité de joints de barres omnibus étant configurée pour être agencée dans un appareillage de commutation ;
un lecteur (404) configuré pour lire la température d'au moins l'un de la pluralité de joints de barres omnibus (402-1-402-6) mesurée par la puce du capteur sans fil passif de l'au moins un joint de barre omnibus ; et
une antenne en champ lointain (406) configurée pour être agencée au niveau d'un sommet de l'appareillage de commutation et configurée pour permettre des communications entre les capteurs sans fil passifs de la pluralité de joints de barres omnibus (402-1-402-6) et le lecteur (404).

8. Système (500) selon la revendication 7, dans lequel l'antenne en champ lointain (406) et le capteur sans fil passif de l'au moins un joint de barre omnibus (402-5, 4026) sont séparés par un blindage métallique, et le système (500) comprend en outre :
au moins une antenne en champ proche (508-1, 508-2) agencée à proximité du capteur sans fil passif et configurée pour améliorer la qualité de communication entre le capteur sans fil passif et le lecteur (404).

9. Système d'Internet des Objets (IoT), comprenant :
un système de surveillance de température de la pluralité de joints de barres omnibus selon l'une quelconque des revendications 7 et 8.
